# EUROPÄISCHE PATENTSCHRIFT

(11) **EP 3 335 532 B1**
(45) Veröffentlichungstag und Bekanntmachung des Hinweises auf die Patenterteilung: **24.07.2019**
(21) Anmeldenummer: 17202975.3
(22) Anmeldetag: 22.11.2017
(51) Int. Cl.: A01B 63/111, A01B 63/114

(54) **ZINKENSTRIEGEL**
TINE HARROW
HERSE À DENTS

(30) Priorität: 15.12.2016 DE 102016124517
(43) Veröffentlichungstag der Anmeldung: 20.06.2018
(73) Patentinhaber: Treffler Maschinenbau GmbH & Co. KG, 86554 Pöttmes-Echsheim (DE)
(72) Erfinder: Treffler, Paul, 86554 Pöttmes-Echsheim (DE)
(74) Vertreter: Charrier Rapp & Liebau

(56) Entgegenhaltungen:
- EP-A1- 2 668 469
- EP-A2- 0 171 719
- EP-B1- 1 349 442
- DE-A1- 3 617 228
- DE-A1-102004 048 759
- DE-A1-102007 008 616
- DE-C1- 3 218 839

## Beschreibung

Die Erfindung betrifft einen Zinkenstriegel nach dem Oberbegriff des Anspruchs 1.

Aus der Druckschrift DE 10 2007 008 616 A1 ist ein Zinkenstriegel bekannt, bei welchem mittels einer Zinkendruckverstelleinheit der Andruck der Striegelzinken einheitlich und automatisch gegenüber dem zu bearbeitenden Boden verstellt werden kann. Dies ermöglicht es, dass auch während der Bearbeitung, beispielsweise der Boden- und Saatbearbeitung von Kulturpflanzen im landwirtschaftlichen Ackerbau, der Andruck/Zinkendruck an wechselnde Bodenverhältnisse angepasst werden kann, wodurch eine gleichbleibende Eindringtiefe der Striegelzinken und damit eine konstant hohe Bearbeitungsqualität erreicht wird. Dabei beurteilt der Landwirt von dem Zugfahrzeug aus die Eindringtiefe der Striegelzinken und variiert bei Bedarf den Andruck der Striegelzinken, wodurch sich auch die Eindringtiefe ändert.

Aufgabe der Erfindung ist es, ein Zinkenstriegel mit einer Zinkenstriegel-Eindringtiefenmessvorrichtung zu schaffen, welche eine kontinuierliche Messung der Eindringtiefe der Striegelzinken ermöglicht, so dass die Eindringtiefe auch bei wechselnden Bodenverhältnissen automatisch reguliert werden kann.

Diese Aufgabe wird durch einen Zinkenstriegel mit den Merkmalen des Anspruchs 1 gelöst. Vorteilhafte Ausgestaltungen der Erfindung sind in den Unteransprüchen angegeben.

Der erfindungsgemäße Zinkenstriegel zeichnet sich dadurch aus, dass sie einen Träger, einen an dem Träger schwenkbar montierten Referenz-Striegelzinken und eine Abstandsmessvorrichtung benachbart dem Referenz-Striegelzinken zur Messung des Abstands zur Oberfläche eines zu bearbeitenden Bodens umfasst, wobei ein Sensor zur Erfassung der Auslenkung des Referenz-Striegelzinkens vorgesehen ist, so dass aus dem Abstand und der Auslenkung die Eindringtiefe des Referenz-Striegelzinkens in den zu bearbeitenden Boden bestimmbar ist. Da die geometrischen Größen des Referenz-Striegelzinkens und die Positionierung gegenüber der Abstandsmessvorrichtung bekannt sind, kann hierdurch auf einfache Weise die Eindringtiefe des Referenz-Striegelzinkens in den zu bearbeitenden Boden rechnerisch ermittelt werden.

Dabei kann die Abstandsmessvorrichtung zur Messwertaufnahme mittels akustischer (beispielsweise Radar, Ultraschall), optischer (beispielsweise Laser), elektronischer (beispielsweise geoelektrisch oder mittels GPS) oder mechanischer Signalerfassung ausgebildet sein. Bevorzugt umfasst die Abstandsmessvorrichtung dabei ein Laufrad, welches vertikal beweglich am Träger befestigt und zum Abrollen auf dem zu bearbeitenden Boden ausgebildet ist. Durch die vertikale Beweglichkeit des Laufrads, welche über eine vertikale Längsführung oder auch eine Schwenkachse realisiert sein kann, kann das Laufrad dem Verlauf des zu bearbeitenden Bodens exakt folgen, so dass über die Auslenkung des Laufrads der Verlauf des Bodens und damit die Höhe des Bodens gegenüber dem Träger bestimmbar ist.

Bevorzugt ist das Laufrad schwenkbar, insbesondere um eine horizontale Schwenkachse, an dem Träger befestigt. Der Sensor kann dabei besonders bevorzugt ausgebildet sein, die Winkeldifferenz zwischen der Auslenkung des Referenz-Striegelzinkens und der Auslenkung des Laufrands zu bestimmen. Eine gesonderte Bestimmung der Winkellage des Referenz-Striegelzinkens zu dem Träger und der Auslenkung des Laufrads relativ zu dem Träger ist hierbei nicht notwendig. Hierdurch kann auf direktem Weg die Eindringtiefe bestimmt werden, was besonders einfach konstruktiv umgesetzt werden kann.

Eine besonders einfache konstruktive Ausführung wird ermöglicht, wenn der Referenz-Striegelzinken und das Laufrad um eine gemeinsame Drehachse schwenkbar an dem Träger befestigt sind. In diesem Fall kann sehr einfach die Winkeldifferenz zwischen dem Referenz-Striegelzinken und dem Laufrad ermittelt werden, indem beispielsweise der eine Teil eines Drehwinkelsensors an einem Lagerzapfen des Referenz-Striegelzinkens und der andere Teil des Drehwinkelsensors an einem benachbart und koaxial angeordneten Lagerzapfen des Laufrads befestigt ist. Hierbei liefert der Drehwinkelsensor direkt die für die Eindringtiefe maßgebliche Winkeldifferenz. Das Signal des Drehwinkelsensors kann dabei von einer Steuereinheit ausgewertet und zur automatischen Einstellung oder auch nur zur Anzeige der Eindringtiefe verwendet werden.

Es ist jedoch auch möglich, als Sensor eine mechanische Anzeigevorrichtung vorzusehen, welche die Auslenkung des Referenz-Striegelzinkens relativ zu dem von der Abstandsmessvorrichtung gemessenen Abstand sichtbar macht. So kann beispielsweise an dem Referenz-Striegelzinken ein nach oben über die Lagerstelle an dem Träger vorstehender Arm mit einem Zeiger und an dem Laufrad ein nach oben über die entsprechende Lagerstelle an dem Träger vorstehender Arm mit einer Skala vorgesehen sein. Werden der Referenz-Striegelzinken und das Laufrad gleichermaßen ausgelenkt, ändert sich die Eindringtiefe und damit auch die Position des Zeigers zu der Skala nicht. Bei einer Relativbewegung des Referenz-Striegelzinkens zu dem Laufrad verschiebt sich jedoch auch der Zeiger zu der Skala und zeigt somit optisch deutlich die veränderte Eindringtiefe. Natürlich kann der Zeiger auch an dem Arm des Laufrads und die Skala an dem Arm des Referenz-Striegelzinkens angeordnet sein.

Somit wird ein Zinkenstriegel zur Bearbeitung von Bodenflächen beansprucht, welcher einen Tragrahmen mit einer Befestigungsvorrichtung zur Befestigung an einem Zugfahrzeug und mehrere an dem Tragrahmen schwenkbar angeordnete Arbeits-Striegelzinken umfasst und dadurch gekennzeichnet ist, dass er mindestens eine oben beschriebene Zinkenstriegel-Eindringtiefenmessvorrichtung aufweist. Der Referenz-Striegelzinken der Zinkenstriegel-Eindringtiefenmessvorrichtung kann dabei bevorzugt identisch zu den Arbeits-Striegelzinken ausgebildet sein, so dass die Auslenkung des Referenz-Striegelzinken der Auslenkung der Arbeits-Striegelzinken entspricht und die ermittelte Eindringtiefe auch bei den Arbeits-Striegelzinken vorliegt. Gerade bei besonders breiten Zinkenstriegeln ist es von Vorteil, wenn über die Breite mehrere Eindringtiefenmessvorrichtungen vorgesehen sind, um Änderungen der Bodenbeschaffenheit und damit der Eindringtiefe über die Breite des Zinkenstriegels erfassen zu können.

Der Zinkenstriegel weist eine Zinkendruckverstelleinheit zur Veränderung der Vorspannung der Arbeits-Striegelzinken auf. Eine derartige Zinkendruckverstelleinheit ist in DE 10 2007 008 616 A1 beschrieben. Mittels dieser Zinkendruckverstelleinheit kann die Vorspannung und damit der Andruck der Arbeits-Striegelzinken einheitlich verstellt werden. Die Zinkendruckverstelleinheit kann dabei einheitlich den Zinkendruck über die gesamte Breite steuern oder, wie oben angesprochen, vorteilhaft bei besonders breiten Zinkenstriegeln mit mehreren Eindringtiefenmessvorrichtungen auch separat bestimmte, in seitlich zueinander versetzten Bereichen der Arbeits-Striegelzinken den Zinkendruck unabhängig steuern, je nach dem Wert der Eindringtiefe, die für diesen Bereich von der entsprechenden Zinkenstriegel-Eindringtiefenmessvorrichtung bestimmt wurde.

Erfindungsgemäss ist dabei der Referenz-Striegelzinken der Zinkenstriegel-Eindringtiefenmessvorrichtung mit der Zinkendruckverstelleinheit zur gemeinsamen Verstellung des Zinkendrucks der Arbeits-Striegelzinken und des Referenz-Striegelzinkens verbunden ist. Hierdurch wird gewährleistet, dass der Referenz-Striegelzinken den gleichen Andruck wie die Arbeits-Striegelzinken aufweist, so dass die Eindringtiefe des Referenz-Striegelzinkens auch bei verändertem Andruck der Eindringtiefe der Arbeits-Striegelzinken entspricht.

Eine besonders einfache Ansteuerung der Striegelzinken kann dadurch erreicht werden, dass die Arbeits-Striegelzinken und der Referenz-Striegelzinken über Spannseile mit der Zinkendruckverstelleinheit verbunden sind. Derartige Spannseile beispielsweise aus Stahl ermöglichen eine einfache Kraftumlenkung und sind zudem besonders leicht.

Um den Andruck besonders genau einstellen zu können und zudem die Elastizität der Striegelzinken zu erhöhen, kann zwischen den Arbeits-Striegelzinken bzw. dem Referenz-Striegelzinken und der Zinkendruckverstelleinheit jeweils ein Federelement angeordnet sein.

In einer vorteilhaften Ausführungsform kann die Zinkendruckverstelleinheit ein Rohr umfassen, welches drehbar an dem Tragrahmen befestigt ist. An der Außenseite des Rohrs können dabei die Spannseile befestigt sein, so dass bei einer Drehung des Rohrs die Spannseile aufgewickelt und damit gleichmäßig gespannt werden.

Weitere Besonderheiten und Vorzüge der Erfindung ergeben sich aus der folgenden Beschreibung bevorzugter Ausführungsbeispiele anhand der Zeichnungen. Es zeigen:
- **Fig. 1**: eine Seitenansicht auf einen Zinkenstriegel mit einer Eindringtiefenmessvorrichtung;
- **Fig. 2**: eine perspektivische Ansicht der Zinkenstriegel-Eindringtiefenmessvorrichtung von Figur 1 und
- **Fig. 3**: eine Draufsicht auf den Zinkenstriegel von Figur 1.

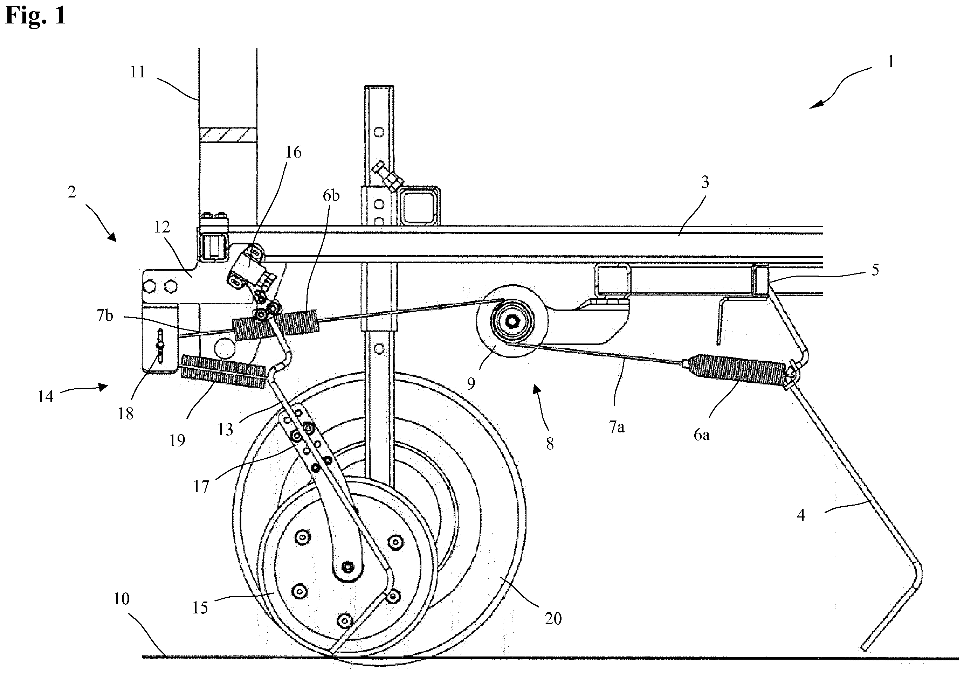

In Figur 1 ist eine Seitenansicht auf einen Zinkenstriegel 1 mit einer Zinkenstriegel-Eindringtiefenmessvorrichtung 2 gezeigt. Der Zinkenstriegel 1 umfasst in bekannter Weise einen Tragrahmen 3, an welchem mehrere Arbeits-Striegelzinken schwenkbar befestigt sind.

Exemplarisch ist hier nur der Arbeits-Striegelzinken 4 gezeigt, welcher über eine Lagerstelle 5 schwenkbar an dem Tragrahmen 3 befestigt ist. Der Arbeits-Striegelzinken 4 ist, wie auch die weiteren nicht dargestellten Arbeits-Striegelzinken, separat über eine Zugfeder 6a und ein Spannseil 7a mit einer Zinkendruckverstelleinheit 8 verbunden.

Die Zinkendruckverstelleinheit 8 umfasst ein Rohr 9, welches drehbar an dem Tragrahmen 3 befestigt ist und sich quer über die Breite des Zinkenstriegels 1 erstreckt. Das Spannseil 7a ist dabei exzentrisch an dem Rohr 9 befestigt, so dass bei einer Drehung des Rohrs 9 gegenüber dem Tragrahmen 3 das Spannseil 7a auf- bzw. abgewickelt wird. Hierdurch kann der Arbeits-Striegelzinken 4 um die Lagerstelle 5 an dem Tragrahmen 3 vorgespannt und der Andruck des Arbeits-Striegelzinkens 4 gegenüber einem zu bearbeitenden Boden 10 eingestellt werden. Entsprechend sind auch die weiteren nicht dargestellten Arbeits-Striegelzinken mit der Zinkendruckverstelleinheit 8 verbunden, was eine gemeinsame Ansteuerung aller Arbeits-Striegelzinken ermöglicht. Je nach der Größe des Andrucks und der Bodenbeschaffenheit dringen dabei Arbeits-Striegelzinken unterschiedlich weit in den Boden 10 ein, was durch die Zinkenstriegel-Eindringtiefenmessvorrichtung 2 erfasst werden kann.

Die Zinkenstriegel-Eindringtiefenmessvorrichtung 2 ist in einem vorderen Bereich des Zinkenstriegels 1 benachbart einer als Dreipunktaufnahme ausgebildeten Befestigungsvorrichtung 11 zur Montage an einem Zugfahrzeug angeordnet, kann jedoch auch an anderer Stelle an dem Tragrahmens 3 befestigt sein. Die Zinkenstriegel-Eindringtiefenmessvorrichtung 2 umfasst dabei einen Träger 12, einen an dem Träger 12 schwenkbar befestigten Referenz-Striegelzinken 13 und eine Abstandsmessvorrichtung 14 bevorzugt benachbart dem Referenz-Striegelzinken 13. Die Abstandsmessvorrichtung 14 ist ausgebildet, den Abstand zur Oberfläche des zu bearbeitenden Bodens 10 zu messen und ist hier als Laufrad 15 ausgeführt. Daneben sind jedoch auch akustische, optische, elektronische oder weitere mechanische Verfahren zur Bestimmung des Abstands möglich.

Weiter umfasst die Zinkenstriegel-Eindringtiefenmessvorrichtung 2 einen Sensor 16 zur Erfassung der Auslenkung des Referenz-Striegelzinkens 13. Da die geometrischen Größen des Laufrads 15 und des Referenz-Striegelzinkens 13 jeweils mit Anbindung an den Träger 12 bekannt sind, kann mittels des Abstandswert und der Auslenkung einfach die Eindringtiefe des Referenz-Striegelzinkens 13 in den Boden 10 berechnet werden.

Das Laufrad 15 ist dabei drehbar an einer Schwinge 17 montiert, welche wiederum schwenkbar an dem Träger 12 befestigt ist, wodurch eine vertikale Beweglichkeit des Laufrads 15 gegenüber dem Träger 12 und damit eine Anpassung des Laufrads 15 an unterschiedliche Höhen und Unebenheiten des Bodens 10 ermöglicht wird. Anstelle einer schwenkbaren Anbindung an den Träger kann die Schwinge 17 beispielsweise auch über eine Linearführung mit einer vertikalen Bewegungskomponente an dem Träger 12 befestigt sein.

In der gezeigten Ausführungsform ist der Sensor 16 ausgebildet, die Winkeldifferenz zwischen der Auslenkung des Referenz-Striegelzinkens 13 und der Auslenkung des Laufrads 15 zu bestimmen. Hierzu sind der Referenz-Striegelzinken 13 und das Laufrad 15 vorzugsweise über eine gemeinsame Drehachse schwenkbar, also koaxial an dem Träger 12 befestigt. Der Sensor 16 ist sowohl mit dem Referenz-Striegelzinken 13 als auch dem Laufrad 15 bzw. der Schwinge 17 verbunden, so dass die Differenz zwischen der Auslenkung des Laufrads 15 und der Auslenkung des Referenz-Striegelzinkens 13 direkt bestimmbar ist. In einer nicht gezeigten Ausführungsform kann jedoch auch jeweils ein Sensor zur Bestimmung der Auslenkung des Referenz-Striegelzinkens 13 gegenüber dem Träger 12 und der Auslenkung des Laufrads 15 gegenüber dem Träger 12 vorgesehen sein. Rechnerisch kann auch hierbei die Differenz zwischen den Auslenkungen von Laufrad 15 und Referenz-Striegelzinken 13 bestimmt werden, wobei in dieser Ausführungsform das Laufrad auch von der Abstandsmessung räumlich weiter beabstandet sein kann. Es ist jedoch von Vorteil, wenn der Abstand zwischen dem Referenz-Striegelzinken 13 und der Abstandsmessung 14 möglichst gering ist.

Da das Laufrad 15 auf der Oberfläche des Bodens 10 abrollt und nicht in den Boden 10 eindringt, kann über die unterschiedliche Auslenkung von Laufrad 15 und Referenz-Striegelzinken 13, bzw. den Zwischenwinkel zwischen Laufrad 15 und den Referenz-Striegelzinken 13 die Eindringtiefe bestimmt werden.

Um zu gewährleisten, dass der Referenz-Striegelzinken 13 repräsentativ für die Arbeits-Striegelzinken 4 die Eindringtiefe wiedergibt, ist vorgesehen, dass der Referenz-Striegelzinken 13 identisch zu den Arbeits-Striegelzinken 4 ausgebildet ist. Zudem ist der Referenz-Striegelzinken 13 ebenfalls über ein Spannseil 6b und ein Federelement 7b mit der Zinkendruckverstelleinheit zur gemeinsamen Verstellung der Vorspannung und damit des Andrucks der Arbeits-Striegelzinken 4 und des Referenz-Striegelzinkens 13 verbunden. Um die Spannkraft entsprechend umzulenken, ist eine Umlenkrolle 18 an dem Träger 12 angeordnet, um welche das Spannseil 6b des Referenz-Striegelzinkens 13 geführt ist. Hierdurch wird gewährleistet, dass der Referenz-Striegelzinken 13 gleichermaßen wie die Arbeits-Striegelzinken 4 vorgespannt wird und damit den gleichen Andruck auf den Boden 10 ausübt und die gleichen Eindringtiefe aufweist.

Um ein sicheres Abrollen des Laufrads 15 auf dem Boden 10 zu gewährleisten und ein Abheben zu verhindern, ist das Laufrad 15 bzw. die Schwinge 17 über eine Zugfeder 19, welche sich am Träger 12 abstützt, gegen den Boden 10 vorgespannt. Zudem ist an dem Tragrahmen 3 des Zinkenstriegels 1 ein Stützrad 20 vertikal verstellbar befestigt, welches einen definierten Abstand des Tragrahmens 3 mit den Arbeits-Striegelzinken 4 und dem Referenz-Striegelzinken 13 zu dem Boden 10 gewährleistet.

Bei dem gezeigten Zinkenstriegel 1 kann über eine Eindringtiefenreguliervorrichtung, welche die Zinkenstriegel-Eindringtiefenmessvorrichtung 2, die Zinkendruckverstelleinheit 8 und eine nicht gezeigte Steuereinheit umfasst, der Andruck der Arbeits-Striegelzinken 4 geregelt werden. Hierzu ist die Steuereinheit ausgebildet, den Ist-Wert der Eindringtiefe, welcher über die Zinkenstriegel-Eindringtiefenmessvorrichtung 2 ermittelt wird, mit einem Soll-Wert, welcher beispielsweise an einem Terminal im Zugfahrzeug vorgegeben werden kann, zu vergleichen und bei Abweichungen die Zinkendruckverstelleinheit 8 derart anzusteuern, dass der Ist-Wert der Eindringtiefe dem Soll-Wert entspricht.

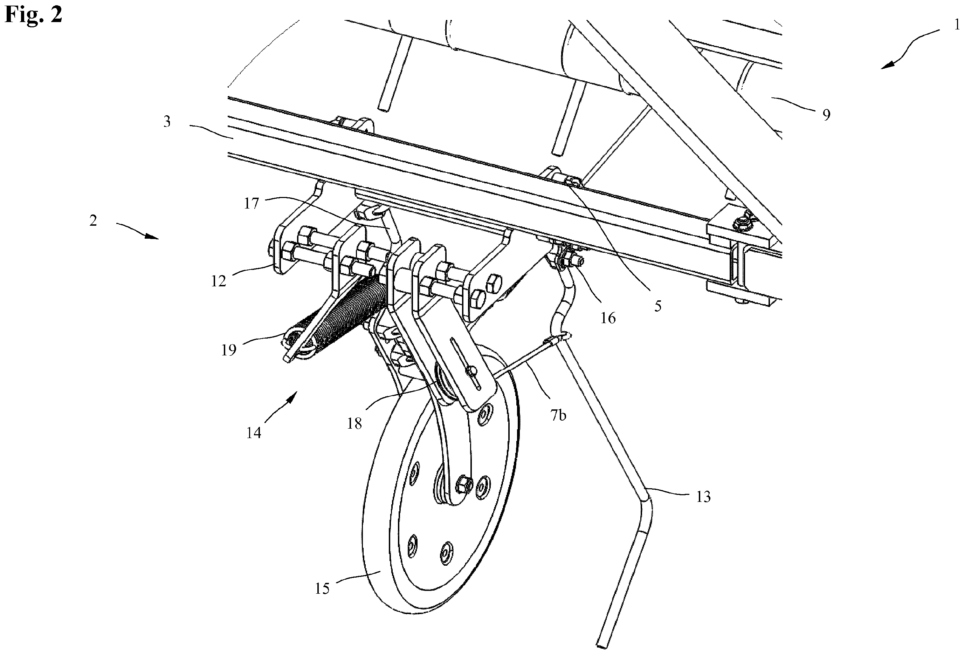

In Figur 2 ist eine perspektivische Ansicht der Zinkenstriegel-Eindringtiefenmessvorrichtung 2 von Figur 1 gezeigt. Wie dort zu entnehmen ist, sind das Laufrad 15 und der Referenz-Striegelzinken 13 geringfügig seitlich, also in Querrichtung des Zinkenstriegels 1, zueinander versetzt angeordnet, jedoch um eine gemeinsame Drehachse schwenkbar an dem Träger 12 befestigt. Zudem weist der Träger 12 entsprechende als Blechbiegeteile ausgebildete Halteelemente für die Zugfeder 19 des Laufrads 15 und die Umlenkrolle 18 auf. Da das Rohr 9 der Zinkendruckverstelleinheit 8 in Fahrtrichtung des Zinkenstriegels 1 hinter der Zinkenstriegel-Eindringtiefenmessvorrichtung angeordnet ist, dient die Umlenkrolle 18 der Umlenkung des Spannseils 7b in entgegengesetzte Richtung für eine Vorspannung auch des Referenz-Striegelzinkens 13 in Fahrtrichtung des Zinkenstriegels 1.

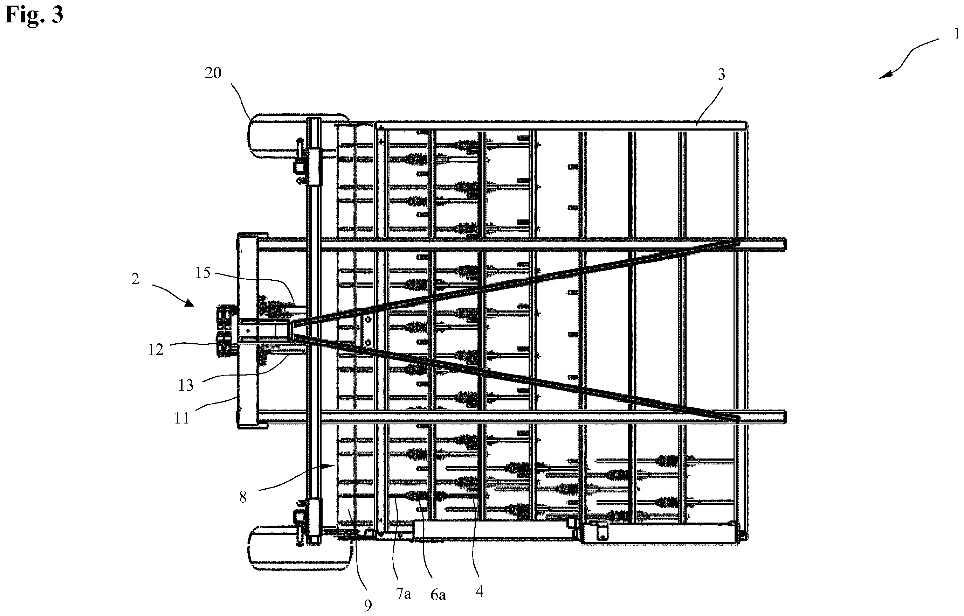

In Figur 3 ist eine Draufsicht auf den Zinkenstriegel 1 von Figur 1 gezeigt. Wie dort zu entnehmen ist, sind an dem Tragrahmen 3 eine Vielzahl von Arbeits-Striegelzinken identisch zu dem beschriebenen Arbeits-Striegelzinken 4 in einem regelmäßigen Muster angeordnet. Jeder der Arbeits-Striegelzinken ist dabei über ein Federelement und ein Spannseil mit dem Rohr 9 der Zinkendruckverstelleinheit 8 verbunden, so dass alle Arbeits-Striegelzinken und der Referenz-Striegelzinken 13 über die Zinkendruckverstelleinheit 8 gemeinsam vorgespannt werden. Das Rohr 9 der Zinkendruckverstelleinheit 8, welches auch als Stange und dergleichen ausgebildet sein kann, ist quer zur Längsrichtung/Fahrtrichtung des Zinkenstriegels 1 orientiert, welche in der Darstellung von Figur 3 von rechts nach links verläuft.

### Bezugszeichenliste

- 1: Zinkenstriegel
- 2: Zinkenstriegel-Eindringtiefenmessvorrichtung
- 3: Tragrahmen
- 4: Arbeits-Striegelzinken
- 5: Lagerstelle
- 6a, 6b: Federelement
- 7a, 7b: Spannseil
- 8: Zinkendruckverstelleinheit
- 9: Rohr
- 10: Boden
- 11: Befestigungsvorrichtung
- 12: Träger
- 13: Referenz-Striegelzinken
- 14: Abstandsmessvorrichtung
- 15: Laufrad
- 16: Sensor
- 17': Schwinge
- 18: Umlenkrolle
- 19: Zugfeder
- 20: Stützrad

## Patentansprüche

1. Zinkenstriegel (1) zur Bearbeitung von Bodenflächen, umfassend einen Tragrahmen (3) mit einer Befestigungsvorrichtung (11) zur Befestigung an einem Zugfahrzeug, mehrere an dem Tragrahmen (3) schwenkbar angeordnete Arbeits-Striegelzinken (4) und eine Zinkendruckverstelleinheit (8) zur Veränderung der Vorspannung der Arbeits-Striegelzinken (4), **gekennzeichnet durch** eine Zinkenstriegel-Eindringtiefenmessvorrichtung (2) mit einem Träger (12), einem an dem Träger (12) schwenkbar montierten Referenz-Striegelzinken (13) und einer Abstandsmessvorrichtung (14) benachbart dem Referenz-Striegelzinken (13) zur Messung des Abstands zur Oberfläche eines zu bearbeitenden Bodens (10), wobei ein Sensor (16) zur Erfassung der Auslenkung des Referenz-Striegelzinkens (13) vorgesehen ist, so dass aus dem Abstand und der Auslenkung die Eindringtiefe des Referenz-Striegelzinkens (13) in den zu bearbeitenden Boden (10) bestimmbar ist und wobei der Referenz-Striegelzinken (13) der Zinkenstriegel-Eindringtiefenmessvorrichtung (2) mit der Zinkendruckverstelleinheit (8) zur gemeinsamen Verstellung des Zinkendrucks der Arbeits-Striegelzinken (4) und des Referenz-Striegelzinkens (13) verbunden ist.

2. Zinkenstriegel (1) nach Anspruch 1, **dadurch gekennzeichnet, dass** die Abstandsmessvorrichtung (14) als akustische, optische, elektronische oder mechanische Abstandsmessvorrichtung ausgebildet ist.

3. Zinkenstriegel (1) nach Anspruch 1 oder 2, **dadurch gekennzeichnet, dass** die Abstandsmessvorrichtung (14) ein Laufrad (15) umfasst, welches vertikal beweglich an dem Träger (12) befestigt ist.

4. Zinkenstriegel (1) nach Anspruch 3, **dadurch gekennzeichnet, dass** das Laufrad (15) schwenkbar an dem Träger (12) befestigt ist.

5. Zinkenstriegel (1) nach Anspruch 4, **dadurch gekennzeichnet, dass** der Sensor (16) ausgebildet ist, die Winkeldifferenz zwischen der Auslenkung des Referenz-Striegelzinkens (13) und der Auslenkung des Laufrands (15) zu bestimmen.

6. Zinkenstriegel (1) nach Anspruch 4 oder 5, **dadurch gekennzeichnet, dass** der Referenz-Striegelzinken (13) und das Laufrad (15) um eine gemeinsame Drehachse schwenkbar an dem Träger (12) befestigt sind.

7. Zinkenstriegel (1) nach einem der Ansprüche 1 bis 6, **dadurch gekennzeichnet, dass** die Arbeits-Striegelzinken (4) und der Referenz-Striegelzinken (13) über Spannseile (7a; 7b) mit der Zinkendruckverstelleinheit (8) verbunden sind.

8. Zinkenstriegel (1) nach Anspruch 7, **dadurch gekennzeichnet, dass** zwischen den Arbeits-Striegelzinken (4) bzw. dem Referenz-Striegelzinken (13) und der Zinkendruckverstelleinheit (8) jeweils ein Federelement (6a; 6b) angeordnet ist.

9. Zinkenstriegel (1) nach Anspruch 7 oder 8, **dadurch gekennzeichnet, dass** die Zinkendruckverstelleinheit (8) ein Rohr (9) umfasst, welches drehbar an dem Tragrahmen (3) befestigt ist.

## Claims

1. Tine harrow (1) for processing soil surfaces comprising a supporting frame (3) with an attachment device (11) for attachment to a pulling vehicle, several working harrow tines (4) arranged to be pivotable on the supporting frame (3) and a tine pressure-adjusting unit (8) for changing the pretension of the working harrow tines (4), **characterised by** a tine harrow penetration depth measuring device (2) with a support (12), a reference harrow tine (13) mounted to be pivotable on the support (12) and a distance-measuring device (14) adjoining the reference harrow tine (13) for measuring the distance from the surface of a soil (10) to be processed, wherein a sensor (16) is provided for recording the deflection of the reference harrow tine (13) so that the penetration depth of the reference harrow tine (13) into the soil (10) to be processed can be determined from the distance and the deflection and wherein the reference harrow tine (13) of the tine harrow penetration depth measuring device (2) is connected to the tine pressure-adjusting unit (8) for common adjustment of the tine pressure of the working harrow tine (4) and of the reference harrow tine (13).

2. Tine harrow (1) according to claim 1, **characterised in that** the distance-measuring device (14) is designed as an acoustic, optical, electronic or mechanical distance-measuring device.

3. Tine harrow (1) according to claim 1 or 2, **characterised in that** the distance-measuring device (14) comprises a running wheel (15) which is attached to be vertically movable on the support (12).

4. Tine harrow (1) according to claim 3, **characterised in that** the running wheel (15) is attached to be pivotable on the support (12).

5. Tine harrow (1) according to claim 4, **characterised in that** the sensor (16) is designed to determine the angle difference between the deflection of the reference harrow tine (13) and the deflection of the running wheel (15).

6. Tine harrow (1) according to claim 4 or 5, **characterised in that** the reference harrow tine (13) and the running wheel (15) are attached on the support (12) to be pivotable about a common rotational axis.

7. Tine harrow (1) according to one of claims 1 to 6, **characterised in that** the working harrow tine (4) and the reference harrow tine (13) are connected to the tine pressure-adjusting unit (8) via tensioning ropes (7a; 7b).

8. Tine harrow (1) according to claim 7, **characterised in that** respectively a spring element (6a; 6b) is arranged between the working harrow tine (4) or the reference harrow tine (13) and the tine pressure-adjusting unit (8).

9. Tine harrow (1) according to claim 7 or 8, **characterised in that** the tine pressure-adjusting unit (8) comprises a pipe (9) which is attached to be rotatable on the supporting frame (3).

## Revendications

1. Herse à dents (1) pour le traitement de surfaces de sol, comprenant un cadre porteur (3) avec un dispositif de fixation (11) pour la fixation à un véhicule de traction, plusieurs dents de herse de travail (4) disposées de manière pivotante au niveau du cadre porteur (3) et une unité de réglage de pression de dent (8) pour la modification de la précontrainte des dents de herse de travail (4), **caractérisée par** un dispositif de mesure de profondeur de pénétration de la herse à dents (2) avec un support (12), une dent de herse de référence (13) montée de manière pivotante au niveau du support (12) et un dispositif de mesure de distance (14) adjacent à la dent de herse de référence (13) pour la mesure de la distance par rapport à la surface d'un sol à traiter (10), dans laquelle un capteur (16) est prévu pour la détection de la déviation de la dent de herse de référence (13), de sorte que la profondeur de pénétration de la dent de herse de référence (13) dans le sol à traiter (10) puisse être déterminée à partir de la distance et de la déviation et dans laquelle la dent de herse de référence (13) du dispositif de mesure de profondeur de pénétration de la herse à dents (2) est reliée à l'unité de réglage de pression de dent (8) pour le réglage commun de la pression de dent des dents de herse de travail (4) et de la dent de herse de référence (13).

2. Herse à dents (1) selon la revendication 1, **caractérisée en ce que** le dispositif de mesure de distance (14) est réalisé en tant que dispositif de mesure de distance acoustique, optique, électronique ou mécanique.

3. Herse à dents (1) selon la revendication 1 ou 2, **caractérisée en ce que** le dispositif de mesure de distance (14) comprend une roue porteuse (15), laquelle est fixée verticalement mobile au support (12).

4. Herse à dents (1) selon la revendication 3, **caractérisée en ce que** la roue porteuse (15) est fixée de manière pivotante au support (12).

5. Herse à dents (1) selon la revendication 4, **caractérisée en ce que** le capteur (16) est réalisé pour déterminer la différence angulaire entre la déviation de la dent de herse de référence (13) et la déviation du bord de roue (15).

6. Herse à dents (1) selon la revendication 4 ou 5, **caractérisée en ce que** la dent de herse de référence (13) et la roue porteuse (15) sont fixées de manière pivotante autour d'un axe de rotation commun au support (12).

7. Herse à dents (1) selon l'une quelconque des revendications 1 à 6, **caractérisée en ce que** les dents de herse de travail (4) et la dent de herse de référence (13) sont reliées à l'unité de réglage de pression de dent (8) par le biais de câbles de tension (7a ; 7b).

8. Herse à dents (1) selon la revendication 7, **caractérisée en ce que** respectivement un élément ressort (6a ; 6b) est disposé entre les dents de herse de travail (4) ou la dent de herse de référence (13) et l'unité de réglage de pression de dent (8).

9. Herse à dents (1) selon la revendication 7 ou 8, **caractérisée en ce que** l'unité de réglage de pression de dent (8) comprend un tube (9), lequel est fixé de manière rotative au cadre porteur (3).
